# EUROPEAN PATENT APPLICATION

(11) **EP 1 336 336 A1**
(43) Date of publication of application: **20.08.2003**
(21) Application number: 03445016.3
(22) Date of filing: 29.01.2003
(51) Int. Cl.: A01K 1/015

(54) **Arrangement for slatted flooring in stables and cowsheds**

(30) Priority: 06.02.2002 SE 0200357
(71) Applicant: Fritz, Gunnar, 571 24 Nässjö (SE)
(72) Inventor: Fritz, Gunnar, 571 24 Nässjö (SE)
(74) Representative: Arwidi, Bengt Dr.

(57) **Abstract**

Arrangement for concrete beams with intervening gaps forming part of a slatted flooring for stables and cowsheds, comprising a base, which is designed to be fixed over the beam (5) so that it covers the upper side of the beam, and a rubber wearing surface (1) fixed to the upper side of the base.

The arrangement may comprise longitudinal parts (3), which form an angle v of less than 90° with the upper side of the base.

When the base is not under load, the longitudinal parts of the base bear against the sides of the concrete beam, longitudinal parts of the base preferably being bent somewhat outwards at their bottom edge.

## Description

The present invention relates to an arrangement for improving slatted flooring in stables and cowsheds giving the flooring beams a rubber wearing surface. The arrangement comprises a sheet metal with a rubber wearing surface.

### Background to the invention

A link exists between the hygiene in cowsheds and various hoof diseases. Poor hygiene causes harm, among other things, to hooves and soles.

It is common nowadays to encounter finished concrete slatted floors that need to be supplemented in order to obtained the required environment for animals and in order to reduce the incidence of hygiene-related diseases. The concrete slatted flooring is moreover exposed to wear from the hooves. It is also difficult to keep the concrete clean after a period of wear when the concrete has become very abraded, which forms a substrate for bacteria to grow.

If the cows stand and move about in manure every day it is more or less like walking in soft snow. It builds up until the cows are walking not on their hooves but on a clod of manure. In these situations sores form in the sole of the hoof in which bacteria flourish and this can rapidly also lead to complications. Hoof rot, which is entirely due to the environment in which the animals are kept, is common. There is therefore a great need for improved hygiene in cowsheds.

### Description

The present invention is intended for use on concrete beams in slatted flooring with intermediate gaps.

The incidence of hygiene-related hoof diseases, especially hoof rot and hoof eczema, can be greatly reduced by means of slatted rubber flooring which provides a significantly improved environment for the animals compared to conventional slatted concrete flooring. In addition slatted rubber flooring can reduce the risk of pressure injuries on the hind legs. Calves stalled in boxes with slatted rubber flooring also keep their front legs, rear legs, belly and tail cleaner than when stalled in boxes with conventional slatted concrete flooring. This affords the animals greater comfort.

The slatted rubber flooring considerably reduces the wearing of the concrete. The slatted rubber flooring can moreover also be replaced as required without the need for intervention in the floor structure.

The slatted rubber flooring is advantageous both in new installations and in existing slatted flooring that requires renovation.

The invention comprises a base suited to the purpose and a slatted rubber part, which has been vulcanised together with the base in order to afford the animals comfort and to prevent wear of the concrete beams. The base may have a curved surface which is arched away from the upper side of the concrete beam and which yields under pressure and which can be adapted so that it springs down and comes into contact with the upper side of the concrete beam under a certain load.

The base is prepared so that it comprises longitudinal parts that form an approximately 90° angle with the upper side the base. When the base is not under load, the longitudinal parts thereof can bear against the sides of the concrete beam in order to give the upper side of the base its arched character.

A rubber strip can be placed between the upper side of the concrete beam and the underside of the base in order to damp and retard the sagging of the base under load. The rubber strip makes it easier to control the resistance to sagging of the base when loaded from above and makes for increased comfort.

At their bottom edge the longitudinal parts may be bent somewhat outwards to facilitate fixing of the slatted rubber flooring by pressure from the top, by means of which they are pressed into place. When the wearing surface of the slatted rubber flooring has been worn down, it is consequently possible to replace the worn slatted rubber flooring with a new one.

The slatted rubber flooring may be provided with anti-slip protection in order to give the animals a more secure footing by ribbing the rubber wearing surface with a suitable pattern.

The slatted rubber flooring is installed by a simple method. One end of the slatted rubber flooring is fitted in place, over the concrete beam, and the entire slatted rubber flooring is then pressed down into place by the force of a foot or the like.

The characteristics of the invention are set forth in claim 1.

### Preferred embodiment

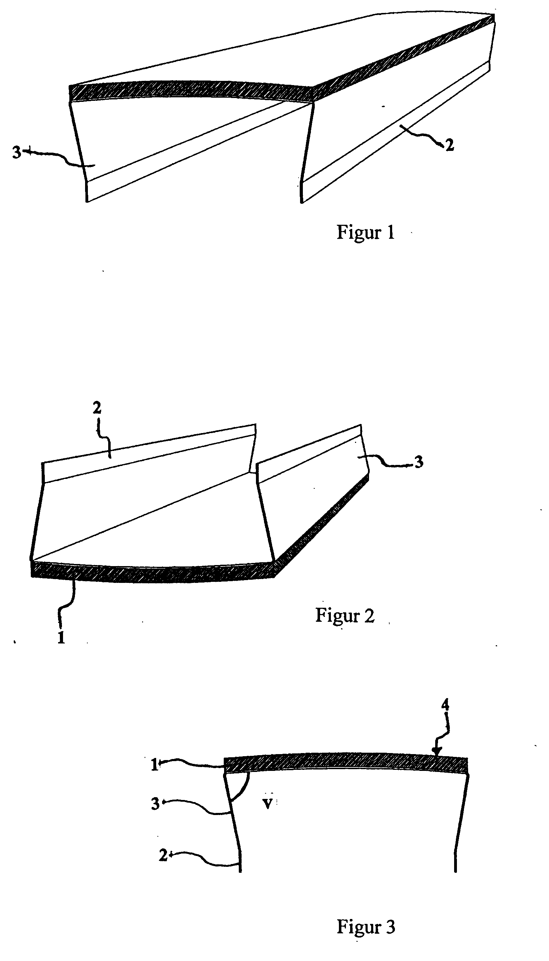

The invention will be described in more detail below with reference to the examples of embodiments shown in the drawings attached: in which
Figure 1 shows a perspective view of an arrangement with wearing surface turned upwards.
Figure 2 shows a perspective view of an arrangement with wearing surface turned downwards.
Figure 3 shows a side view of an arrangement.

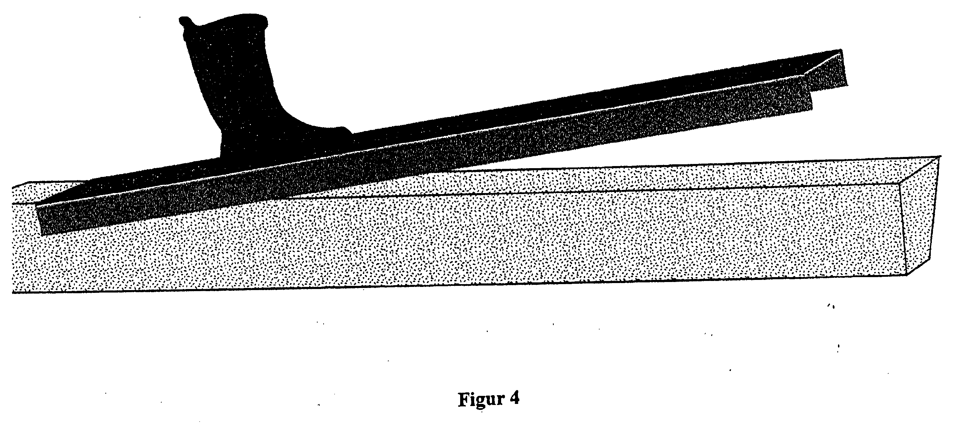

Figure 4 shows a perspective view of the arrangement and an inclined slatted floor in which fitting has been commenced by pressing with a foot on a slatted rubber flooring.

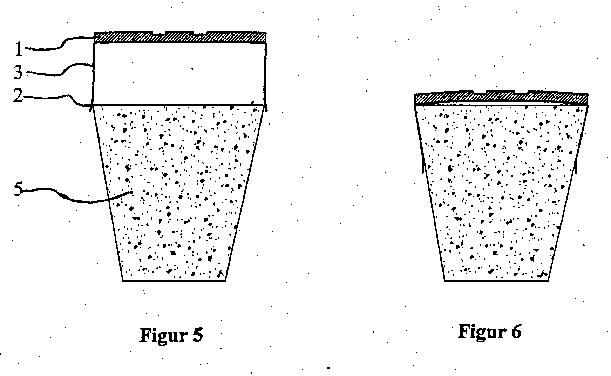

Figure 5 shows a side view of a slatted flooring and an arrangement somewhat expanded for fitting.
Figure 6 shows a side view of a slatted flooring and an arrangement that has been fitted in place.

The invention comprises a base, which is preferably of sheet metal, which has been adapted for the purpose and a rubber wearing part 1 which has been vulcanised together with the sheet metal to afford animals comfort and to prevent wearing of the concrete beams. In an alternative embodiment the base may be made of some form of plastic.

The base is prepared by bending, for example, so that it comprises longitudinal parts 3 that form an angle v of less than 90° with the upper side of the sheet metal. When the sheet metal is not under load, these longitudinal parts 3 bear substantially against sides of the concrete beam 5 in order provide a stable construction, which ensures that the arrangement does not move laterally over the concrete slat 5.

To facilitate fitting of the slatted rubber flooring, the longitudinal parts 3 are preferably bent somewhat outwards 2 at their bottom edge so that they can easily be fitted in place by pressing on the upper side of the slatted rubber flooring. The slatted rubber flooring is installed by a relatively simple method. In order to make fitting of the slatted rubber floor easier, one end thereof is inclined towards the concrete beam, with the result that the longitudinal parts 3 of the sheet metal, which at one end have been slanted down towards the concrete beam 5, are slightly distended and slipped down over the concrete beam 5. The entire slatted rubber flooring is then pressed down into place, for example by applying a foot thereto and successively pressing down.

In order to give the animals a more secure and stable footing, the wearing surface of the slatted rubber flooring is preferably provided with anti-slip protection 4 by ribbing the rubber wearing surface, which is fixed on the sheet metal, with a suitable pattern.

## Claims

1. Arrangement for concrete beams with intervening gaps forming part of a slatted flooring for stables and cowsheds, **characterised in that** it comprises a sheet metal or plastic base, which is designed to be fixed over the concrete beam so that it covers the upper side of the concrete beam, and a rubber wearing surface fixed to the upper side of the base.

2. Arrangement according to Claim 1, **characterised in that** the base is arched away from the upper side of the concrete beam.

3. Arrangement according to either of the preceding Claims, **characterised in that** the rigidity of the base is adapted so that it springs down and comes into contact with the upper side of the concrete beam when under load.

4. Arrangement according to Claim 2, **characterised in that** the rubber strip is placed between concrete the beam and the base for damping and retarding the sagging of the base under load.
